Europäisches Patentamt

European Patent Office

Office européen des brevets

(11) Numéro de publication: **0 053 984**
**A2**

## (12) DEMANDE DE BREVET EUROPEEN

(21) Numéro de dépôt: **81401954.3**

(22) Date de dépôt: **08.12.81**

(51) Int. Cl.³: **G 01 N 29/04**
**//G01N37/00**

(30) Priorité: **09.12.80 FR 8026071**

(43) Date de publication de la demande:
**16.06.82 Bulletin 82/24**

(84) Etats contractants désignés:
**DE GB IT SE**

(71) Demandeur: **Thomé, Paul**
**8 Rue Coutureau**
**F-92210 Saint Cloud(FR)**

(72) Inventeur: **Thomé, Paul**
**8 Rue Coutureau**
**F-92210 Saint Cloud(FR)**

(74) Mandataire: **Thibon-Littaye, Annick**
**Cabinet A. THIBON-LITTAYE 11 rue de l'Etang**
**F-78160 Marly Le Roi(FR)**

(54) **Méthode et dispositif de contrôle automatique de l'intégrité de soudures d'assemblage.**

(57) Dispositif de contrôle automatique des soudures entre pièces tubulaires, utilisable pour le contrôle par ultrasons des soudures des noeuds des plateformes offshore et le contrôle des soudures des circuits nucléaires. Un chariot comporte deux extrémités fixes (6 et 26), avec leurs roues de centrage (15), un équipage mobile avec deux flasques (31 et 92) et des rails de guidage (32, 33) ; cet équipage tourne sur des roulements (10). Le chariot comporte un tambour (40) se déplaçant sur les rails et portant un bras téléscopique (42) orientable par rotation sur son axe. L'extrémité du bras porte une tête d'inspection (43).

Une commande numérique assure la programmation du déplacement et de l'orientation de la tête d'inspection en regard de la soudure.

EP 0 053 984 A2

./...

FIG-2

Méthode et dispositif de contrôle automatique de l'intégrité de soudures d'assemblages.

La présente invention a pour objet une méthode et un dispositif de contrôle automatique destinés à détecter, à
mesurer,à surveiller des fissures éventuelles et autres
dommages dans des assemblages mécano-soudés. Elle concerne
un véhicule circulant à l'intérieur d'un corps creux, portant un bras robot servant à positionner les sondes de
mesure au contact des zones à contrôler.

Qu'il s'agisse de répondre aux exigences de qualité de la
fabrication (contrôle initial) ou à celles de l'exploitation (dommages éventuels, corrosion, fatigue...), il est
dans bien des cas exigé et nécessaire d'être assuré de
l'intégrité d'une structure et de prévenir d'un risque
d'accident. Ces diagnostics sont déjà imposés sur les
centrales nucléaires, par exemple, et elles le seront
prochainement de façon plus critique sur les plate-formes
off-shore.

Actuellement et même pour les exemples précités, dans bien
des cas le contrôle est effectué manuellement, ce qui limite considérablement la confiance que l'on peut attendre
de ces mesures (off-shore), ou ce qui demande un temps
appréciable et implique l'absorption de rayonnement pour
les opérateurs (centrales nucléaires).

La présente invention au contraire, permet de mesurer les
paramètres définissant un défaut : localisation, orientation, dimensions. Sa mise en oeuvre est compatible avec
une prise en mémoire de toutes les valeurs correspondantes ;
par ailleurs, étant automatique, elle s'affranchit des
incertitudes qui accompagnent tout procédé manuel.

Elle est particulièrement destinée à l'inspection des soudures d'assemblages tubulaires où l'un des éléments est accessible de l'intérieur. Elle répond à des conditions difficiles d'environnement, elle permet d'opérer dans un espace confiné ou un environnement hostile tel que dans les centrales nucléaires ou en off-shore. Elle convient au contrôle d'assemblages tubulaires qu'il s'agisse de rabouttage de canalisations, de piquages, ou encore de trellis tubulaires, avec leurs noeuds de raccordement entre les membrures principales (fûts ou piles, chords) et les membrures secondaires (bracings).

Dans le cas de plate-forme off-shore par exemple, qui atteignent des dimensions colossales, les soudures se comptent par centaines. Les noeuds des treillis comportent jusqu'à 6 ou 8 bracings, avec ou sans goussets raidisseurs. Ces soudures coincident avec des zones particulièrement sollicitées, susceptibles par leur nature complexe d'être sujettes à des défauts de fabrication, et par leur situation d'être soumises à des contraintes alternées génératrices de fissures de fatigue.

Le dispositif mécanique objet de l'invention permet de réaliser des mesures directes, exhaustives, précises et reproductibles, rapides et qui ne requièrent pas l'intervention en place d'un opérateur. Il répond donc aux exigences d'une surveillance en service ("in-service inspection"). En pratique, il permet de positionner fermement et d'orienter correctement des palpeurs de mesure à quelques millimètres près par rapport aux cordons de soudure et de faire explorer dans ces conditions l'intégralité du cordon de soudure (balayage de la soudure par les palpeurs). Ces palpeurs émettent des signaux et ils recoivent des échos ou des "images" qui traduisent la présence de défauts. De préférence, on utilisera soit des sondes à courants de Foucault (eddy current) soit des sondes à ultrasons, montées sur une tête de mesure qui est déplacée contre la face interne de la membrure, en regard de la soudure.

L'invention sera maintenant plus complètement décrite
en se référant à un mode de réalisation particulier, nullement limitatif, illustré à l'aide des figures ci-annexées
dans lesquelles :

Les figures 1a, 1b, 1c, 1d, montrent la zone couverte
par un balayage des capteurs d'un dispositif de contrôle
selon l'invention dans une vue schématique en coupe transversale.

La figure 2 représente, en coupe longitudinale partielle,
le dispositif de contrôle en position dans l'axe d'une
membrure principale tubulaire.

La figure 3 représente, une vue schématique partielle en
coupe, selon I-I' de la figure 2.

La figure 4a illustre plus particulièrement la réalisation du module à bras téléscopique que comporte le dispositif de l'invention, dans une vue en coupe selon
III-III' de la figure 2.

La figure 4b représente, une coupe transversale du bras
de ce module selon IV-IV' de la figure 4a.

La figure 5 représente, comme la figure 3, mais avec plus
de détails, le dispositif selon l'invention dans une coupe
partielle transversalementà une membrure principale dans
laquelle il est placé.

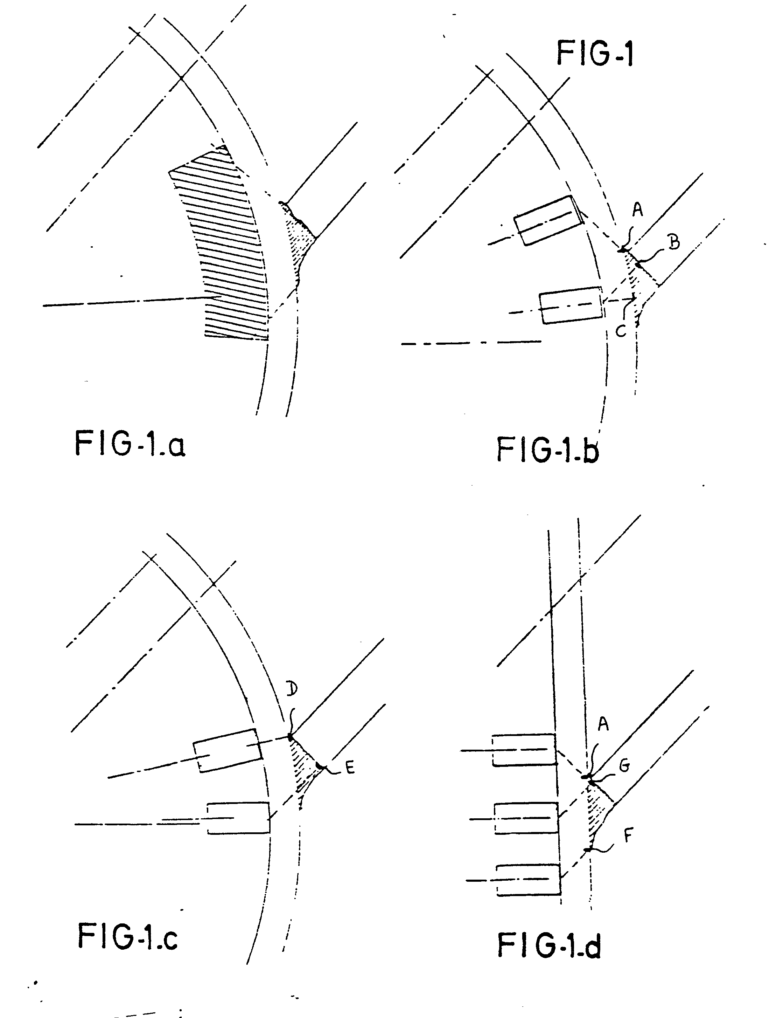

La zone de balayage des palpeurs est indiquée sur la
figure 1a. Les fissures sont détectées par des palpeurs
droits et des palpeurs d'angle à ultrasons. La largeur
de la soudure correspond à la zone de disparition des échos des ondes des palpeurs droits, sur la surface extérieure ; aussi les irrégularités des enregistrements révèleront-elles les manques de pénétration en racine de soudage (défaut "D" figure 1). Les autres fissures, collages et inclusions (A, B, C, E, F , G fig.1) sont décelées dans le mode émetteur-récepteur ("pulse-echo"). On voit sur ces figures 1 qu'il n'y a aucune difficulté à déceler les fissures sur la membrure principale, et que, pour autant que les soudures sont entièrement pénétrées, toutes les fissures dans la soudure et dans la membrure secondaire seront elles aussi détectées.

Le dispositif de contrôle qui se déplace à l'intérieur d'une membrure permet le contrôle des soudures des membrures secondaires lorsque ces soudures sont entièrement pénétrées.

Il a pour fonction de déplacer une sonde contre ou à proximité de la surface intérieure de la membrure, de reconnaître l'emplacement des soudures, et d'en effectuer l'exploration pour trouver les fissures éventuelles, par balayage de cette soudure avec des sondes correctement orientées par rapport à la direction de la soudure.

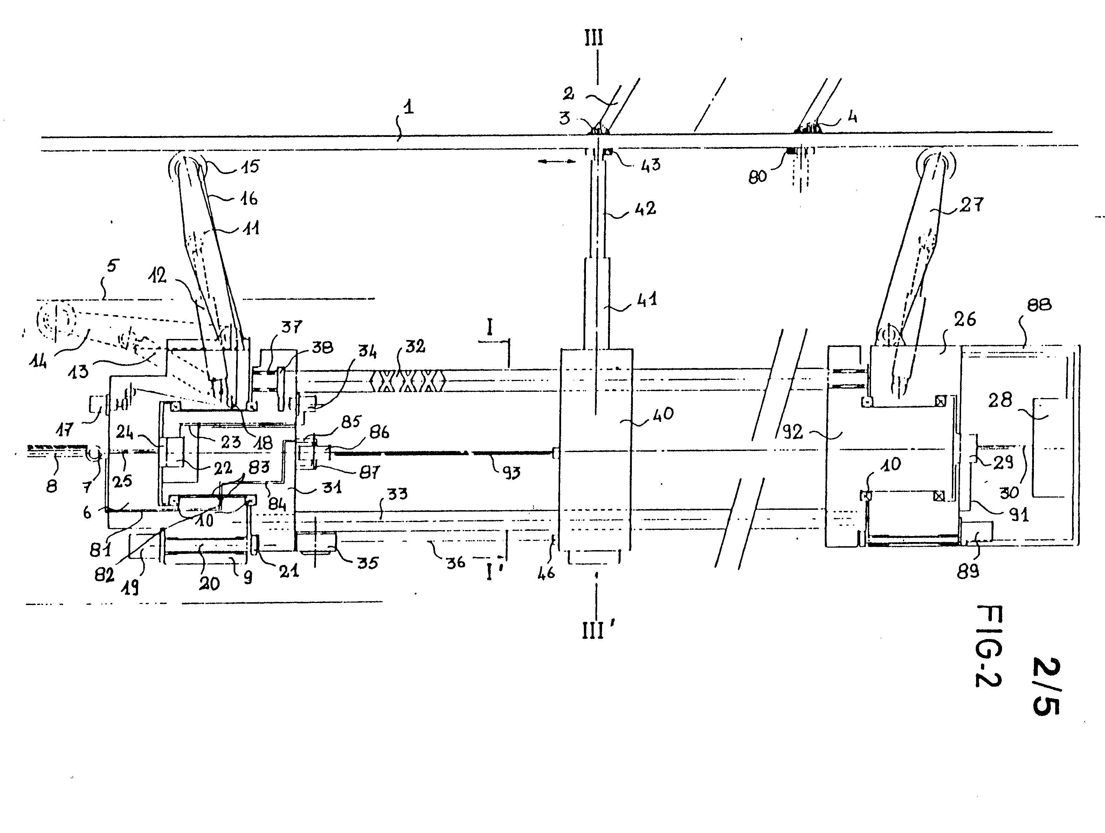

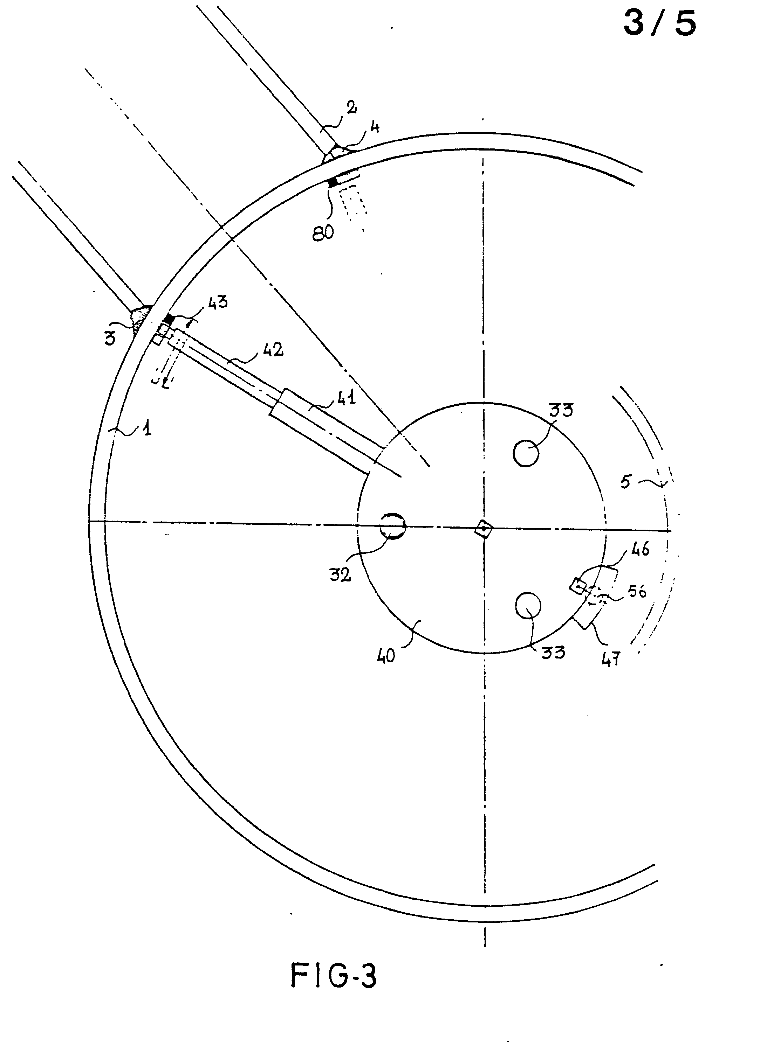

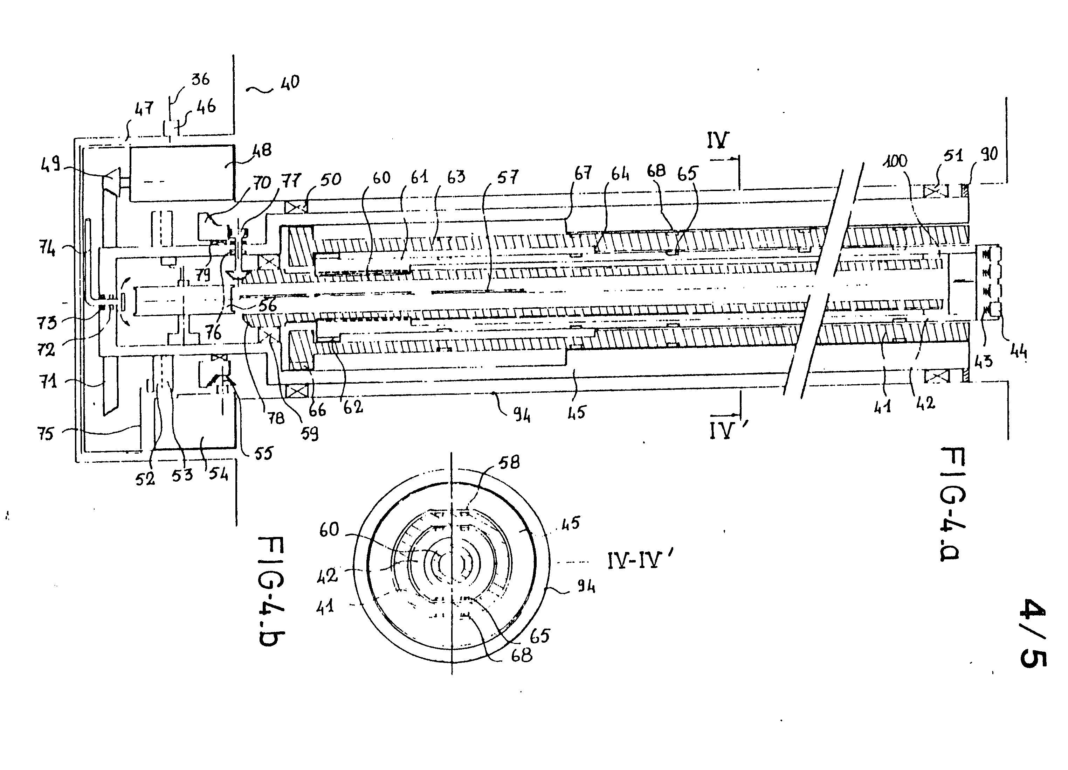

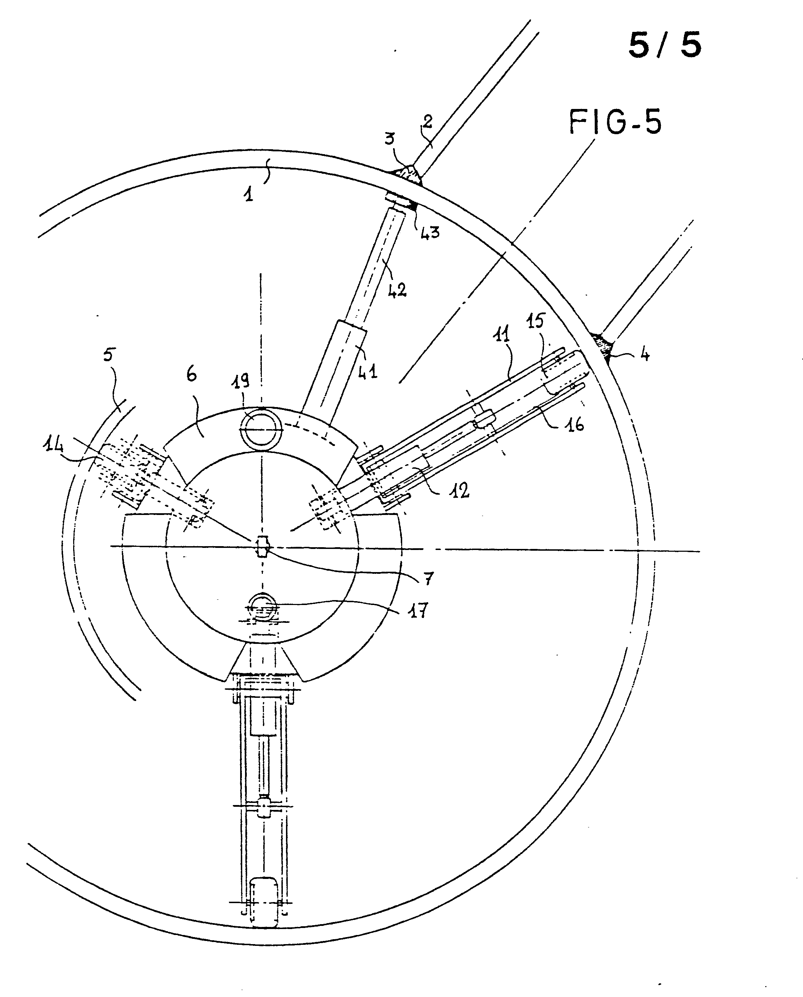

Dans l'exemple illustré dans les Figures 2, 3, 4, 5, ce "scanner interne" (SCI) est descendu dans une membrure verticale 1 sur laquelle ont été rapportées des membrures secondaires 2 par des soudures à pleine pénétration 3. Ces soudures sont contrôlées par un assemblage de palpeurs à ultrasons 44 constituant la sonde 43 de mesure. Lorsque la sonde contrôle la position diamétralement opposée de la soudure, en 4, cette sonde est venue en 80 et elle a tourné de 180 degrés sur elle-même.Le SCI ("scanner interne") est supporté par des câbles 8 liés à un manneton 7. Ces câbles assurent le maintien mécanique, l'alimentation électrique des moteurs, l'instrumentation et un circuit d'eau déminéralisée assurant le couplage de la sonde. Si les membrures étaient horizontales, on intègrerait un chariot automoteur au SCI.

Le SCI roule et se centre à l'intérieur de 1 grâce à des bras 11 et 27 pourvus de roues 15 en leur extrémité ; ces bras sont déployés par des vérins 12. Ces bras s'accomodent d'une gamme de diamètres de membrures. Le diamètre minimal est représenté par la membrure 5 à laquelle correspondent les positions 13 et 14 du vérin 12 et du bras 11 respectivement. Lorsque le SCI est en position choisie, définie à une dizaine de centimètres près, les roues 15 sont bloquées par freinage par l'intermédiaire des câbles 16 qui, par les poulies de renvoi 18, sont commandées par le moteur 17.

Le sci comporte une partie fixe 6 par rapport aux câbles, une partie mobile en cage d'écureuil tournant autour de l'axe du SCI, et une partie inférieure fixe également. Sur la partie rotative se déplace le module 40 portant la sonde 43. Le porte-sonde téléscopique 41, 42 est sorti pour venir en appui contre la surface interne, il est susceptible d'être orienté par une rotation autour de son axe.

La partie fixe supérieure comporte une couronne 9 de même que la partie fixe inférieure 26. Sur cette couronne sont placés des roulements et des butées à billes 10 positionnant la partie mobile. Au travers de la partie fixe supérieure transitent les câbles 25 d'alimentation électrique et ceux d'alimentation reliés à la sonde. Ces câbles viennent sur un collecteur électrique glissant, multipolaire, ayant une partie fixe 24 et une partie rotative 22, cette dernière étant solidaire de la rotation de la partie mobile. Les câbles électriques 23 alimentent le moteur électrique pas à pas 34 qui assure le déplacement du module 40. Sur la partie fixe supérieure est fixé le moteur pas à pas 19 qui, par l'axe 20 et le pignon 21 assure la rotation de la partie mobile 31. La couronne fixe 9 est

0053984

- 6 -

également pourvue d'une alimentation en eau déminéralisée arrivant par le conduit 81 et débouchant dans une rainure cylindrique 82. Ce circuit d'eau sert à alimenter la partie mobile par une canalisation 84 débouchant dans la chambre délimitée entre la partie fixe et la partie mobile par les joints toriques d'étanchéité 83.

La partie fixe inférieure 26 comporte un moteur pas à pas 89 couplé avec le moteur 19. Le collecteur 29 assure la liaison électrique avec la partie rotative inférieure 92. Une centrale électrohydraulique 28 alimentée par 30 actionne les vérins des bras 27. Cette centrale est protégée par un capot 88.

La partie mobile rotative comprend une flasque cylindrique supérieure et une flasque cylindrique inférieure, reliées par des tirants 33 et par une vis à billes 32. L'alimentation électrique de la partie fixe inférieure est réalisée par des câbles passant dans 33. Le circuit d'eau déminéralisée 84 est raccordé à un enrouleur -tambour 86 porté par le bras 87. De ce tambour part le conduit 93 assurant l'alimentation en eau du module 40. De même, un enrouleur-tambour 35 maintient en tension les câbles 36 d'alimentation électrique et d'instrumentation reliés au module 40.

Le module 40 se déplace sur les tirants 33. Il est entraîné par la vis à billes 32, maintenue par les paliers 37, et dont la rotation est commandée par le moteur pas à pas 34 attaquant la couronne dentée 38.

Le module 40 a pour fonction d'assurer l'appui des capteurs (de la sonde) contre la membrure et d'orienter cette sonde par rapport à la soudure. Les câbles d'instrumentation sont reliés aux sondes qui, par ailleurs, seront noyées par une circulation d'eau déminéralisée ou de tout autre fluide de couplage.

Ces fonctions seront réalisées de la manière exposée ci-après. .

Le module comporte un puits cylindrique 94, radial. Ce puits contient une chemise 45 centrée par les roulements 50 et 51, et dont la rotation relativement à 40 est commandée par un moteur pas à pas 48 attaquant par un pignon conique 49 une couronne dentée 71 solidaire de 45. L'extrémité de 45 comporte un collecteur électrique annulaire dont une face 53 est solidaire de 45 alors que l'autre face 52 est solidaire du module. Le collecteur est relié par le câble 75 à la prise de raccordement 46 laquelle reçoit l'extrémité du câble 36.

Une bague d'étanchéité 90 protège la chambre comprise entre 94 et 45.

A l'extrémité et à l'intérieur de 45 est fixé l'enrouleur-tambour 56 assurant le maintien en tension des câbles d'instrumentation 57 reliés à la sonde. Une canalisation d'eau 74 solidaire de 40 traverse coaxialement la face de la chemise 45. Elle est centrée par un roulement 73 et elle possède un joint torique d'étanchéité 72.

Cette extrémité est protégée par le capot fixe 47.

Cette extrémité est également traversée radialement par un axe portant deux pignons, le pignon cylindrique 77 extérieur est attaqué par une couronne 70 centrée par le roulement 79 ; le pignon conique intérieur attaque l'extrémité 78 de l'axe fileté 60 dont la mise en rotation va assurer le déploiement du bras télescopique. La rotation de la couronne 70 est commandée par le moteur pas à pas 54 avec son pignon conique 55 attaquant la denture conique correspondante de 70.

L'étanchéité est assurée par le joint 76.

0053984

- 8 -

Le bras téléscopique comporte un tube intérieur 42 et un tube coaxial 41. Ils coulissent sans tourner à l'intérieur de 45 grâce aux plats 58, et ils sont donc asservis à la rotation de 45.

Le tube 41 comporte des paliers autolubrifiants de guidage 66 et 68 ; le tube 42 comporte des paliers autolubrifiants de guidage 62 et 65. La course du tube intérieur est définie par la longueur de la portée 63 jusqu'à la butée 64. La course du tube extérieur 41 est limitée à la butée 67 de la chemise.

Le déploiement du tube téléscopique est commandé par la rotation de l'axe fileté 60 sur lequel coulisse un écrou 61 à renvoi de billes solidaire du tube intérieur 42. Cet axe est maintenu concentrique par un roulement 59 s'appuyant sur la chemise et par une bague en matière plastique 100 en l'autre extrémité.

La tête de 42 porte la sonde 43 équipée de palpeurs à ultrasons 44, montés individuellement sur des ressorts, de façon à compenser la courbure de la membrure et à assurer ainsi un couplage correct.

Le fonctionnement du SCI est le suivant : le SCI est descendu à une dizaine de centimètres près d'une position repérée et il est bloqué en position. Le module est alors rapidement déplacé une fois que la sonde a été sortie et est venue au contact de la surface intérieure du tube. La sonde enregistre le passage de la soudure car elle ne reçoit plus les échos de retour de la surface extérieure de la membrure. Elle intercepte donc dans son trajet deux signaux correspondant au croisé de la soudure par une même génératrice.

Le module est alors positionné à mi-distance de ces signaux puis on lui fait subir une rotation. Les nouveaux signaux dans cette direction transversale à la première, définissent l'axe de la membrure secondaire. Comme les dimensions et les inclinaisons du noeud sont connues, on sait le profil théorique de la soudure. Comme l'on connaît le centre de cette soudure, on connaît alors sa position sur membrure avec une précision satisfaisante. Les moteurs pas à pas sont alors commandés pour que la sonde balaye totalement la soudure et reste constamment orientée perpendiculairement à la tangente à la soudure : en effet les transducteurs à ultrasons émettent des ondes transversales (inclinées sur la normale à la surface) qui doivent être correctement orientées pour détecter les fissures le long du cordon de soudage. Eventuellement la sonde balaye également transversalement la soudure en se déplaçant progressivement le long de celle-ci. Toutes ces opérations sont réalisées par commande numérique.

En d'autres termes le repérage de la soudure s'effectue au moyen des deux déplacements du module portant la tête d'inspection, longitudinalement dans l'axe de la membrure et circulairement par rotation autour de cet axe, et en utilisant là les palpeurs droits dont le faisceau ultra sonore est radial. Une fois ce repérage effectué, connaissant la position et la forme théorique de la soudure, on utilise les mêmes deux déplacements pour balayer la zone de la soudure et simultanément on fait tourner la tête d'inspection autour de son axe afin de toujours présenter les palpeurs d'angle dans la bonne direction. C'est en effet dans cette opération, les palpeurs d'angle émettant un faisceau orienté à 45 degrés de la surface exploré, qu'il sont utilisés. Le synchronisme de la rotation de la tête d'inscription avec le balayage est assuré par les moyens de commande automatique par calculateur numérique.

Revendications.

1. Méthode de contrôle automatique de l'intégrité de soudures d'assemblages, caractérisée en ce qu'on déplace une tête d'inspection sur une face interne d'une membrure principale pour y déceler la présence d'une zone de soudure d'assemblage avec une membrure secondaire par la face externe opposée de la membrure principale, on centre la tête d'inspection par rapport à la zone de soudure ainsi décelée puis l'on balaye la zone de soudure par la tête d'inspection pour détecter les défauts éventuels.

2. Méthode selon la revendication 1, caractérisée en ce que, la membrure principale étant tubulaire, on réalise le balayage par déplacement de la tête d'inspection circulairement autour de l'axe de la membrure principale et parallèlement à cet axe, tandis que l'on fait varier l'orientation de la tête d'inspection sur elle-même autour d'un axe radial par rapport à la membrure principale pour maintenir un détecteur de défauts qu'elle porte dans une même configuration par rapport à un cordon de soudure de forme prédéterminée.

3. Méthode selon la revendication 1 ou 2, caractérisée en ce que le positionnement de la tête d'inspection est réalisé à partir de la détection du début et de la fin de la zone de soudure, au moyen d'un détecteur à faisceau d'ultra-sons orienté perpendiculairement à la surface de la membrure principale, en ce que pendant ledit balayage la détection des défauts de soudure s'effectue au moyen d'un détecteur à faisceau orienté angulairement sur l'axe de la tête d'inspection et en ce que le déplacement de la tête d'inspection en balayage et en rotation sur elle-même, est déterminé suivant un programme de commande numérique.

4. Dispositif de contrôle automatique de l'intégrité de soudures d'assemblages, caractérisé en ce qu'il comporte un chariot mobile longitudinalement parallèlement à la face interne d'une membrure principale (1) et un module (40) mobile en translation et en rotation sur ledit chariot et portant un bras téléscopique (42) déployable radialement pour amener une tête d'inspection (43) contre la face interne de la membrure principale.

5. Dispositif selon la revendication 4, caractérisé en ce que la tête d'inspection est orientable par rotation par rapport à l'axe du bras téléscopique.

6. Dispositif selon la revendication 4, caractérisé en ce qu'il comporte des moyens pour commander automatiquement le déplacement du module portant la tête d'inspection selon l'axe du chariot et en rotation autour de l'axe du chariot ainsi que le déploiement du bras téléscopique radialement et que la rotation de la tête d'inspection autour de l'axe de ce bras.

7. Dispositif selon la revendication 4, caractérisé en ce que ledit module est monté coulissant sur des rails de guidage (32,33) entre deux flasques (31,92) formant avec ces rails un équipage mobile en rotation entre deux extrémités fixes (6,26) du chariot portant chacune des roues de centrage du chariot dans une membrure tubulaire.

8. Dispositif selon la revendication 7, caractérisé en ce que la tête d'inspection comporte des palpeurs à ultrasons montés élastiquement pour appuyer sur la membrure principale, et en ce que le dispositif comporte des moyens de circulation d'eau de couplage dans ces palpeurs, des moyens d'alimentation électrique de ces palpeurs et de transmission des commandes et des résultats de mesure, les connexions électriques et les alimentations en liquide de couplage étant assurées par des collecteurs cylindriques ou annulaires à la liaison entre les extrémités du chariot et les flasques de l'équipage mobile.

9. Dispositif selon la revendication 7, caractérisé en ce qu'il comporte des moteurs en confinement étanche pour la commande du déploiement et de l'orientation du bras téléscopique, un collecteur électrique annulaire à l'extérieur du corps du bras téléscopique et un enrouleur recevant les câbles d'instrumentation à l'intérieur du bras pour assurer la connexion avec les palpeurs de la tête d'inspection.

10. Dispositif selon la revendication 7, caractérisé en ce que la tête d'inspection porte au moins un palpeur à ultrasons droit, dont le faisceau est parallèle au bras téléscopique et un palpeur à ultrasons d'angle, dont le faisceau est incliné par rapport au précédent.

FIG-1

FIG-1.a

FIG-1.b

FIG-1.c

FIG-1.d

FIG-2

FIG-3

FIG-4.a

FIG-4.b

IV-IV'

FIG-5